(19) Europäisches Patentamt
European Patent Office
Office européen des brevets

(11) EP 1 262 502 A1

(12) EUROPEAN PATENT APPLICATION

(43) Date of publication:
**04.12.2002 Bulletin 2002/49**

(51) Int Cl.[7]: **C08G 18/42**, C08G 18/67, C08G 18/10, C09J 175/16

(21) Application number: **02251826.0**

(22) Date of filing: **14.03.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **25.05.2001 JP 2001156806**

(71) Applicants:
- **Kyoeisha Chemical Co., Ltd.**
  **Osaka-shi, Osaka 541-0054 (JP)**
- **DANTEX GRAPHICS LTD.**
  **Bradford, West Yorkshire BD2 1EY (GB)**

(72) Inventors:
- **Ikeda, Junichi**
  **Nara-shi, Nara 630-8453 (JP)**
- **Danon, Richard**
  **Leeds, West Yorkshire LS17 8SG (GB)**

(74) Representative: **Baker, Colin John**
**Eric Potter Clarkson**
**Park View House**
**58 The Ropewalk**
**Nottingham NG1 5DD (GB)**

# (54) A printing relief and an adhesive material for making the same

(57) An adhesive without causing movement or peeling of the relief film and yet may facilitate the re-sticking thereto. A urethane prepolymer represented the formula [I]:

$$\text{A-O-CONH-B-NHCO-}$$

$$\text{-[\{O-}C_pH_q\text{-(O-CO-}C_rH_s\text{-CO-O-}C_pH_q)_l\text{-O-CONH-B-NHCO\}}_u\text{-(O-D-O-CONH-B-NHCO)}_v\text{-}$$

$$\text{-\{O-}C_pH_q\text{-(O-CO-}C_rH_s\text{-CO-O-}C_pH_q)_t\text{-O-CONH-B-NHCO\}}_u]_w\text{ -O-E} \qquad (I)$$

polymerizes and cures to make adhesive polymer. The adhesive polymer is used for an adhesive material for fixing a relief film onto a printing base of a printing machine.

EP 1 262 502 A1

FIG. 1

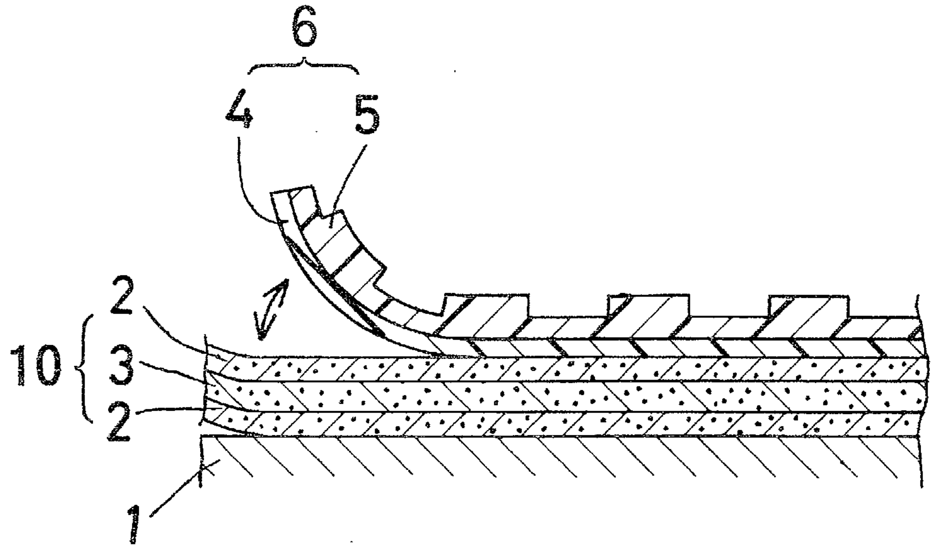

## Description

The present invention relates to a printing relief to be fixed onto a printing base of a printing machine, and an adhesive material for making the printing relief, and a urethane prepolymer for making an adhesive polymer of the adhesive material.

A printing relief of a pattern is fixed to a flat or cylindrical printing base in a printing machine. The printing relief is applied with ink and then pressed to a paper through the printing base with the force from the printing machine. Such patterns, for instance, letters are thus printed on the paper.

Conventionally, to fix a relief to a printing base, a double-sided tape or an adhesive layer heated thermosetting resin was applied on the surface of the printing base and then was covered over with the relief. It would be necessary to repeat that the relief was adhered to and removed from there to adjust an appropriate position on the printing base. After removed, lumps of adhesive layer would remain on the back of the relief and the surface of the printing base. It would be required to wipe away the remaining adhesion layer and clods at every re-adhering, thus making it troublesome.

The present invention would complete to dissolve problems of such conventional printing relief of a pattern.

The first object of the present invention is to provide prepolymer for making an adhesive polymer of an adhesive material, which strongly fixes a relief film made of a resin onto a printing base made of a metal in a printing machine.

The first invention for completing the first object is a urethane prepolymer determined by the following chemical formula [I]:

$$\begin{aligned}&\text{A-O-CONH-B-NHCO-}\\&\text{-[\{O-}C_pH_q\text{-(O-CO-}C_rH_s\text{-CO-O-}C_pH_q)_t\text{-O-CONH-B-NHCO\}}_u\text{-(O-D-O-CONH-B-NHCO)}_v\text{-}\\&\text{-\{O-}C_pH_q\text{-(O-CO-}C_rH_s\text{-CO-O-}C_pH_q)_t\text{-O-CONH-B-NHCO\}}_u]_w\text{-O-E} \qquad \text{........[I]}\end{aligned}$$

In formula [I], A-O- is either one of a dehydrogenated remaining group selected from hydroxyalkyl(meth)acrylate, hydroxyalkyl vynil ether and epoxide including hydroxy group; -B- is a depolyisocyanagated remaining group of organic polyisocyanate; $-O-C_pH_q-(O-CO-C_rH_s-CO-O-C_pH_q)_t-O-$ is a dehydrogenated remaining group of a polyester polyol having a number average molecular weight of 500-5000, of which p is a number of 1-36, q is a number of 2-72, r is a number of 10-34, s is a number of 20-68 and t is a number for making the number average molecular weight; -O-D-O- is either one of a dehydrogenated remaining group selected from alkylene glycol, dimer diol, diol including ester group, diol including ether, diol including carboxy group or the foregoing $-O-C_pH_q-(O-CO-C_rH_s-CO-O-C_pH_q)_t-O-$; -O-E is either one of a dehydrogenated remaining group selected from alkyl alcohol, hydroxy carboxylic acid or hydroxy carboxylic acid ester, or is identical to the foregoing A-O-; and u is a number of 1-50, v is a number of 0-50, and w is a number of 1-10.

Being irradiated with activity energy ray, the urethane prepolymer polymerizes and cures to make an adhesive polymer. Adhesion of such an adhesive polymer is stronger towards a metal, like iron, or a metal oxide, like glass fiber, than towards a resin, like polyethylene terephthalate.

The urethane prepolymer preferably has a number average molecular weight of 3000-100000. If the urethane prepolymer has this number average molecular weight, the adhesive polymer obtained by polymerization thereof will be excellent in pliability, high intensity, heat resistance and durability to make an excellent adhesive material.

The spray of the present invention comprises a can containing the urethane prepolymer with a high pressure liquid gas such as like a butane gas for spraying.

The second object of the present invention is to provide an adhesive material, which adheres and strongly fixes a relief film made of a resin onto a printing base made of a metal in a printing machine, and still, is able to easily peel off the relief film therefrom.

The second invention for completing the second object is such that the adhesive material comprises a supporting layer and adhesive polymer polymerized and cured from the urethane prepolymer, according to the first invention, which is impregnated into or coated onto the supporting layer.

The impregnated or coated urethane prepolymer is preferably performed with a spray or a hot-melt coat.

The adhesive polymer is applied onto one side or both sides of the supporting layer by being impregnated or coated.

The adhesive polymer is applied onto both sides of the supporting layer. A shore A hardness of each adhesive polymer is a degree of 20 to 80 and a thickness of each adhesive polymer is 0.005 to 15mm.

The supporting layer may be a paper, a woven fabric, a non-woven fabric, a polyolefin resin film, a polyester film, a porous resin film or cellulose base film strengthened with a resin. Preferably, the supporting layer is elastic.

The supporting layer may be a foamy sheet having a compressible elasticity. Such a sheet is formed from polyolefin foam or polyurethane foam. Fine bubbles of the foamy sheet would cause compressible elasticity and shock absorbency. Further, adhesive polymer would be contained in bubbles to adhere strongly.

The supporting layer is sheet-like and has a tensile strength of at least 1000 $N/cm^2$ and a thickness of 0.03 to 25 mm. If the strength is more than 1000 $N/cm^2$, it will be sufficient for the supporting layer to undergo the process of being stretched while being impregnated into or coated with a urethane prepolymer. If the supporting layer is too thin, having a thickness less than 0.03mm, it will easily produce wrinkles, whereas, if it exceeds 25mm it will be too thick to bend, making it inconvenient to handle.

The third object of the present invention is to provide a printing relief to be fixed onto a printing base made of a metal arranged in a printing machine.

The third invention for completing the third object is such that the printing relief comprises a relief film made of a resin and an adhesive material of which an adhesive strength to the metal is stronger than to the resin.

The adhesive material of the printing relief is same to the adhesive material of the second invention.

The shape of the printing relief may be cylindrical.

Fig.1 is a sectional view of a principal part showing an embodiment of a printing relief on a printing base according to the present invention.

Fig.2 is a sectional view of a principal part showing another embodiment of a printing relief on a cylindrical printing base according to the present invention.

As shown in Fig. 1, the printing relief of the present invention is a relief film 6 adhered to an adhesive material 10.

The adhesive material 10 and a printing relief 6 & 10 are produced as follows: A urethane prepolymer shown in the aforementioned formula [I] is coated on both sides of a supporting layer and pressed on thereto to connect and permeate. Then, active energy ray irradiates urethane prepolymer unified the supporting layer 3 to polymerize and cure. An adhesive polymer 2 is thus made from the urethane prepolymer on the unified supporting layer 3 and an adhesive material 10 is obtained. A relief resin film 6 adheres to an adhesive material 10 and a printing relief 6 & 10 is obtained. The printing relief 6 & 10 mounts and sticks onto a surface of a metallic printing base 1 of the printing machine.

The adhesive material 10 consists the adhesive polymer 2 unified with the supporting layer 3 and that adhesion thereof is stronger towards a metal than towards a resin. Therefore, when the printing relief 6 & 10 is removed from the metallic printing base 1 for reusing, the adhesive material 10 still remains on the metallic printing base 1 and only the relief resin film 6 peels therefrom.

The relief film 6 is made of a photosensitive resin 5, which would be developed to make images such as letters uneven, formed on a base film 4. The base film 4 is a resin, for instance, polyethylene terephthalate.

The adhesive material 10 consists of adhesive polymer layers 2 on a supporting layer 3. The urethane prepolymer is impregnated into or coated onto the supporting layer 3 by hot-melt coat and is then irradiated with activity energy ray to polymerize and cure. The urethane prepolymer may be coated from a spray can or a compressor. The adhesive polymer layers 2 are thus formed on both surfaces of the supporting layer 3. If the supporting layer 3 is a porous, the adhesive polymer permeates into pores thereof and unifies through pores.

The woven fabric or a non-woven fabric used for the supporting layer 3 may illustrate synthetic fibers, such as polyester or nylon (trade name), natural fibers such as cotton, hemp or wool, and mixture fabric thereof. The polyolefin resin film used for the supporting layer 3 may illustrate polyethylene and polypropylene, and the porous film may illustrate porous polyethylene terephthalate film. The cellulose base film strengthened with a resin is a Japanese paper coated with polypropylene.

If the supporting layer 3 is a resin film, such a film should be coated over with a primer layer before coating urethane prepolymer. The supporting layer 3 of such is, for example, a polyethylene terephthalate coated with a thermosetting polyester resin.

In case of the supporting layer is any one of films, such as a polyolefin resin film, a foam resin film or a cellulose base film strengthened with a resin, such a film may be given a corona discharge treatment beforehand. Such corona discharge treatment radiates the surface of the film to improve adhesion of the film as a supporting layer to the adhesive polymer.

If the supporting layer 3 of a resin film is treated with such primer coating or/and corona treatment, adhesion of the adhesive polymer layer 2 thereto will be stronger than to the base film 4 of the relief film 6, which is not treated with such treatment.

The adhesive polymer for the adhesive material is made from the urethane prepolymer determined by formula [I]. A compound, which may be used for constituting A-O- in formula [I], is selected from: hydroxyethyl (meth)acrylate, hydroxypropyl (meth)acrylate, hydroxybutyl (meth)acrylate, pentaerythritol tri(meth)acrylate, dipentaerythritol penta(meth)acrylate, and ditrimethylolpropane tri(meth)acrylate as hydroxyalkyl (meth)acrylates (hydroxyalkyl acrylates and/ or hydroxyalkyl methacrylates); hydroxyethyl vinyl ether, hydroxybutyl vinyl ether, and cyclohexyldimethanol monovinyl as hydroxyalkyl vinyl ethers; alicyclic monoalcohol including epoxy group, being illustrated by epoxidated tetrahydrobenzyl alcohol and lactone-denaturation epoxidated tetrahydrobenzyl alcohol, and glycidols as epoxide including hydroxy group.

If the A- contains an epoxy group or unsaturated groups such as acryloyl group or vinyl group, the polymerization reaction of the urethane prepolymer by activity energy ray irradiation such as with an electron beam, ultraviolet rays, visible rays, and infrared rays will be carried out promptly. The urethane prepolymer will be cured after going through high polymer quantification, allowing easy and efficient formation of the adhesive polymer. Thereby, an adhesive material for the printing relief with excellent pliability, creep-proof nature, and heat resistance can be obtained.

As organic polyisocyanate, which similarly constitutes -B-, non-yellowing diisocyanates illustrating hexamethylene diisocyanate, isophorone diisocyanate, norbornene diisocyanate, hydrogenated diphenylmethane diisocyanate, trimethylhexamethylene diisocyanate; and aromatic diisocyanates illustrating tolylene diisocyanate, diphenylmethane diisocyanate, xylylene diisocyanate are used. The non-yellowing diisocyanate or the aromatic diisocyanate could be used independently, while it may also be used as a polymeric substance, such as a dimeric substance, a trimeric substance, an addition product, and a biuret product thereof. Moreover, it may also be used as a mixed polymeric substance of non-yellowing diisocyanate and aromatic diisocyanate.

The polyesterpolyol which similarly forms $-O-C_pH_q-(O-CO-C_rH_s-CO-O-C_pH_q)_t-O-$ are obtained by esterification, for example, with; dicarboxylic acid of r=10-34, which illustrates dicarboxylic acid of 18 carbons, unsaturated dimer acid of which an unsaturated carboxylic acid of 18 carbons was carried out dimerization, and a saturated dimer acid which was hydrogenated the unsaturated dimer acid; and diols which illustrate 1,4-butanediol, neopentyl glycol, 1,5-pentanediol, 1,6-hexanediol, 1,9-nonanediol, dimerdiol which the dimer of the unsaturated carboxylic acid of 18 carbons was reduced, and of the isomer thereof. As for the polyesterpolyol, the number average molecular weight is preferred to be 500-5000, whereas it is more preferably 1000-3000.

If the urethane prepolymer is obtained by long chain dicarboxylic acid, the content of a polar ester group per prepolymer molecule is small compared to the prepolymer obtained by using short chain dicarboxylic acid illustrating adipic acid. Therefore, the interaction between the urethane prepolymer molecules becomes small, making the solution viscosity small, which facilitates usage. The adhesive polymer formed by the polymerization of such urethane prepolymer has an adhesion ratio of more than 1:1.5 towards the polyethylene terephthalate and iron, which the difference is fairly large. Accordingly, when stripping off the relief film, the adhesive material of the printing relief maintains adhered to the printing base while the relief film carries out easy interface-stripping from the adhesive material. Furthermore, the adhesive material of the printing relief has outstanding pliability, heat resistance, cold resistance, creep-proof, solvent-proof, and ink-proof.

The compounds used to similarly constitute -O-D-O- are as follows: ethylene glycol, propylene glycol, butylene glycol, pentanediol, hexanediol, heptanediol, octanediol, and nonanediol as alkylene glycols; dimerdiol prepared from dimerized 18 carbons of unsaturated fatty acid, and the isomer thereof as main dimerdiols; glycidol mono(meth)acrylate, trimethylolpropane mono(meth)acrylate, ditrimethylolpropane di(meth)acrylate, and pentaerythritol di(meth)acrylate are mentioned as diols including ester group; 1,3-dihydroxy-2-isostearyloxypropane, 1,3-dihydroxy-2-isononyloxypropane, and 1,3-dihydroxy-2-butyloxypropane are mentioned as diols including ether group; dimethylolpropionic acid, and dimethylolbutanoic acid as diols including carboxyl group.

The compounds used to similarly constitute -O-E are mentioned as follows: alkylalcohols shown by $C_nH_{2n+1}OH$, wherein n is a number of 1-22, there are straight chain, such as methanol, ethanol, propanol, pentanol, hexanol, octanol, nonanol, decanol, dodecanol, and octadecanol; isoalkylalcohols such like isooctanol; secondary alkylalcohols; and tertiary alkylalcohols; hydroxyacetic acid, hydroxypropionic acid, hydroxybutanoic acid, azelaic acid, and 12-hydroxystearic acid as hydroxy carboxylic acids; methyl lactate and butyl lactate as hydroxy carboxylic acid esters. Moreover, the compounds may be the same kind of the aforementioned hydroxyalkyl (meth)acrylates, hydroxyalkyl vinyl ethers, and epoxides including hydroxy group ,which is used to constitute A-O-.

When the -O-E consists of these compounds, the solution viscosity of the urethane prepolymer becomes small due to internal plasticity effect, which facilitates the usage of the urethane prepolymer. Furthermore, the adhesive polymer obtained by polymerization of such urethane prepolymer has outstanding pliability, heat resistance, cold resistance, creep-proof, solvent-proof, ink-proof and adhesion towards the printing base.

A polymerization initiator may coexist for polymerizing the urethane prepolymer. When the A-O- inside the urethane prepolymer consists of a compound of hydroxyalkyl (meth)acrylate, it is preferred that the polymerization initiator is the following: at least one kind of hydroxycyclohexyl phenyl ketone, 1-phenyl-2-hydroxy-2-methylpropane-1-on, 2,2-dimethoxy-2-phenylacetophenone, benzophenone, 4-(2-hydroxyethoxy)phenyl-(2-hydroxy-2-propyl) ketone, and 4-(2-acryloyloxyethoxy)phenyl-(2-hydroxy-2-propyl)ketone; or a mixture of camphorquinone and tertiary amine. The above mentioned polymerization initiator may coexist at 0.5-10 weight part, which preferably is 1-3 weight part, to 100 weight part urethane prepolymer. When the A-O- inside the urethane prepolymer consists of a compound of

hydroxyalkyl vinyl ether or a compound of epoxide including hydroxy group, it is preferred that the polymerization initiator is at least one of the member of onium salt, such as p-hydroxyphenyl benzyl sulfonium salt or p-methoxycarbonyloxyethoxyphenyl dimethyl sulfonium salt. The above mentioned polymerization initiator may coexist at 1-10 weight part, which preferably is 2-5 weight part, to urethane prepolymer of 100 weight part.

To adjust the coating viscosity, a solvent or a dilution monomer may coexist in the urethane prepolymer. As the solvent, hydrocarbon is mentioned. As the dilution monomers, decyl (meth)acrylate, dodecyl (meth)acrylate, tridecyl (meth)acrylate, octadecyl (meth)acrylate, and isomer of these (meth)acrylates are mentioned.

As shown Fig. 2, a relief film 6 may be applied on a cylindrical printing base 1 with a cylindrical adhesive material 10. Such a cylindrical adhesive material 10 may be obtained from a sleeve of a metal, for example iron, or glass fiber as a supporting layer 3 and adhesive polymer layer 2 to make a printing drum. The sleeve having a diameter of 65-1500mm and a width of 240-1400mm may be used for as a cylinder-like supporting layer. If a flexible substance is applied or adhered to the inside or the surface of the sleeve before applying the urethane prepolymer, a sleeve with excellent flexibility, which exhibits convenient printing effects, will be obtained. The polymer adhesive layer is applied on the sleeve as seamless.

The printing relief can be use for various printing systems among letterpress printing, typography rotation printing, flexographic printing, monotonous printing, offset printing, or gravure printing. Among them, it is preferably used for typography rotation printing and flexographic printing.

Hereinafter, examples of the adhesive material and the printing relief of the present invention will be explained in detail. However, the claimed invention would not be limited by these examples.

Example 1

A urethane prepolymer was prepared as follows: Polyesterpolyol used as a raw material has a number average molecular weight of 2000, of which an unsaturated dimer acid of 34 carbons, and 1,6-hexanediol were carried out polycondensation. 7 mol equivalent of this polyesterpolyol and 8 mol equivalent of isophorone diisocyanate, i.e. IPDI, were stirred at 80 to 90°C under the existence of catalytic amount of dibutyltin dilaurate as catalyst and di- t -butylhydroxyphenol as an antioxidant to carry out urethanized reaction. On termination of the reaction, dibutylamine was added to an extracted portion of the reaction mixture, and was reacted with a free isocyanate group. The equivalent of isocyanate was determined by performing a back titration on the amount of amine by hydrochloric acid. Subsequently, 1 mol equivalent of hydroxyethyl acrylate constituting A-O-, and isooctanol constituting -O-E, and a catalytic amount of p-methoxyphenol as a thermal polymerization inhibitor, were added to this reaction mixture. Stirring was continued at the same temperature. The termination of the reaction was determined as the absorption peak of 2280$cm^{-1}$ of the isocyanate group disappeared when an extracted portion of the reaction mixture was measured by an infrared absorption spectrum method. The obtained urethane prepolymer had a number average molecular weight of 31000 and was a viscous liquefied resin substance.

A compound for adhesive polymer formation was prepared by fully mixing 3 weight parts of hydroxycyclohexyl phenyl ketone as photo polymerization initiator, with 100 weight part of this urethane prepolymer. The compound was coated on two sheets of a mold release film by a thickness of 0.2mm using a hot-melt applicator adjusted at 100°C.

As a sheet-like supporting layer, a Japanese paper having a thickness of 0.2 mm had been strengthened by being coated polypropylene on its surface. One side of the Japanese paper was mounted on the compound of one of mold release films and, further, the other mold release applied the compound was covered over the other side of the Japanese paper. Under the same temperature, those compounds and the sheet-like supporting layer were adhered together by pressure to a thickness of 0.38mm, using a spacer.

Ultraviolet ray of 1000$mJ/cm^2$ was irradiated on the both sides from a light source of a high-pressure mercury lamp and the urethane prepolymer thus polymerized to be cured. An adhesive material, which consisted of the supporting layer and adhesive polymer layers on both sides thereof, was obtained.

The adhesive material was contacted and fixed onto a cylinder-like iron printing base arranged in a printing machine. A relief film of a polyethylene terephthalate film and a developed photo-resist resin was mounted onto the adhesive material to be firmly adhered to the printing base. Consequently, a printing relief was obtained.

When a print-proof test was carried out at a print speed of 100m/min, the relief film on the printing base showed no signs of shifting or peeling off even after printing 100000m. Furthermore, no signs of shifting or peeling off were found even after 10 times of repeating the procedure of peeling off, re-sticking the relief film and carrying out the print-proof test.

Example 2

A urethane prepolymer was prepared as follows: Polyesterpolyol used as a raw material has a number average molecular weight of 2000, of which an unsaturated dimer acid of 34 carbons and 1,6-hexanediol was carried out polycondensation. 3 mol equivalent of this polyesterpolyol and 4 mol equivalent of isophorone diisocyanate(IPDI) were stirred at 80 to 90°C under the existence of catalytic amount of dibutyltin dilaurate as catalyst and di- t -butyl-hydroxyphenol as an antioxidant to carry out urethanized reaction. On termination of the reaction, dibutylamine was added to the extracted portion of the reaction mixture, and was reacted with a free isocyanate group. The equivalent of isocyanate was determined by performing a back titration on the amount of amine by hydrochloric acid. Subsequently, 2 mol equivalent of hydroxyethyl acrylate constituting A-O- and -O-E, and a catalytic amount of p-methoxyphenol as a thermal polymerization inhibitor, were added to this reaction mixture. Stirring was continued at the same temperature. The termination of the reaction was determined as the absorption peak of 2280$cm^{-1}$ of the isocyanate group disappeared when an extracted portion of the reaction mixture was measured by an infrared absorption spectrum method. The obtained urethane prepolymer had a number average molecular weight of 20000 and was a viscous liquefied resin substance.

A compound for adhesive polymer formation was prepared by fully mixing together 3 weight part of hydroxycyclohexyl phenyl ketone as an photo polymerization initiator, and 50 weight part of isostearyl acrylate, with 50 weight part of this urethane prepolymer. The compound was coated on two sheets of a mold release film by a thickness of 0.2mm using an applicator under normal temperature.

As a sheet-like supporting layer, a Japanese paper having a thickness of 0.2 mm had been strengthened by being coated polypropylene on its surface. One side of the Japanese paper was mounted on the compound of one of mold release films and, further, the other mold release applied the compound was covered over the other side of the Japanese paper. Under the same temperature, those compounds and the sheet-like supporting layer were adhered together by pressure to a thickness of 0.38mm, using a spacer.

Ultraviolet ray of 1000$mJ/cm^2$ was irradiated on the both sides from a light source of a high-pressure mercury lamp and the urethane prepolymer thus polymerized to be cured. An adhesive material, which consisted of the supporting layer and adhesive polymer layers on both sides thereof, was obtained.

The adhesive material was contacted and fixed onto a cylinder-like iron printing base arranged in a printing machine. A relief film of a polyethylene terephthalate film and a developed photo-resist resin was mounted onto the adhesive material to be firmly adhered to the printing base. Consequently, a printing relief was obtained.

When a print-proof test was carried out at a print speed of 100m/min, the relief film on the printing base showed no signs of shifting or peeling off even after printing 100000m. Furthermore, no signs of shifting or peeling off were found even after 10 times of repeating the procedure of peeling off, re-sticking the relief film and carrying out the print-proof test.

Example 3

A polyethylene terephthalate film was used as a supporting layer instead of the coated Japanese paper in Example 2. One side of the polyethylene terephthalate film was treated with a primer coating and then was coated with the compound for the adhesive polymer formation in Example 2. Irradiating with an ultraviolet ray thereto, an adhesive material consisting of the supporting layer and an adhesive polymer layer on one side thereof was formed.

A business form typography rotation printing machine (product made from Ukita Industry Co.), which has a steel cylinder-like printing base having a circumference of 12 inches and a width of 600mm, was prepared. The cylinder-like printing base and a non-coated surface of the adhesive material was fixed with a double-sided tape provided from Nitto Denko Co.

Subsequently, a relief film having patterns of letters, line drawings, set-solid portions and netting dots and a relief depth of 0.55mm with a total thickness of 0.70mm for letterpress printing was prepared. The relief film was made through a water-development of a photosensitive resin plate of Fuji-torelief WF-70SS having resin hardness Shore D of 22 degrees. The relief film was covered and fixed onto the adhesive polymer layer of the adhesive material to obtain a printing drum of a printing relief.

When a print-proof test was carried out promptly at a printing speed of 100m/min, the relief film on the printing base showed no shifts or signs of peeling off even after printing 100000m. Moreover, the present printed matter had excellent quality, showing good ink printability on the set-solid portion and sharp netting dots, compared to the conventional printed matter using a printing drum fixed a relief onto cylinder-like printing base with only a double-sided tape.

After printing, the relief film was easily and finely stripped off from the adhesive material of the printing relief. The adhesive material was carried out interface-stripping from the relief film, while remaining adhered to the printing base. After re-sticking the relief film, the print-proof test was carried out for 100000m. Although this was repeated for 10 times, no shifts or signs of peeling off were found.

After ended the printing, the stripped relief film and the printing base with the adhesive material remaining stuck onto it, were kept in a dark and cool place for one month. Subsequently, the relief film was stuck to the printing base. Similarly, the 100000m print-proof test was again carried out for 10 times. The quality of the printed matter was good and no shifts or signs of peeling off were found on the relief film.

Example 4

An adhesive material for a printing relief having adhesive polymer layers on both sides was made using the same procedure as in Example 1, except using polyethylene terephthalate film treated a primer of a thermosetting polyester resin on both sides thereof as a supporting layer instead of the coated Japanese paper.
One side of this adhesive material for the printing relief was adhered to a steel cylinder-like printing base of a Business form typography rotation printing machine (product made from Ukita Industry Co.) with care to not involve any air bubbles. A printing relief was obtained by adhering the relief film for letterpress printing made in Example 2 to the adhesive material fixed to the printing base.
As in the case of Example 3, a print-proof test was performed immediately after production and after storing for one month. Identically, a quality of a printed matter was good, and the relief film showed no signs of shifts or peeling off.

Example 5

Polyethylene terephthalate film with 50μm of thickness, of which both sides were treated a primer of a thermosetting polyester resin, is used as a supporting layer instead of the coated Japanese paper in the same procedure of Example 2. The compound for adhesive polymer formation of Example 2 was coated on treated both sides of the polyethylene terephthalate film to obtain an adhesive material comprising adhesive polymer layers having 1.0 mm of each thickness and 60 degrees of a shore A hardness. A relief film was affixed on the adhesive material to form a printing relief. The printing relief was fixed on a printing base through the adhesive material.
A print-proof test was performed as in the case of Example 1. A quality of a printed matter was good and the relief film showed no signs of shifts or peeling off.

Example 6

Following the same procedure in Example 5, an adhesive material, which comprised adhesive polymer layers having 0.5 mm thickness on one side and 1.5 mm thickness on the other side, was obtained. Shore A hardness of both of the adhesive polymer layers is 52 degrees. A relief film was affixed on an adhesive polymer layer having 0.5 mm thickness to form a printing relief. The printing relief was fixed on a printing base through an adhesive polymer layer having 1.5 mm thickness of the adhesive material.
A print-proof test was performed as in the case of Example 1. A quality of a printed matter was good and the relief film showed no signs of shifts or peeling off.

Example 7

Following the same procedure in Example 5, an adhesive material, which comprised adhesive polymer layers having 0.5 mm thickness on one side and 1.5 mm thickness on the other side, was obtained. Shore A hardness of both of the adhesive polymer layers is 45 degrees. A relief film was affixed on an adhesive polymer layer having 1.5 mm thickness to form a printing relief. The printing relief was fixed on a printing base through an adhesive polymer layer having 0.5 mm thickness of the adhesive material.
A print-proof test was performed as in the case of Example 1. A quality of a printed matter was good and the relief film showed no signs of shifts or peeling off.

Example 8

A label printing machine for flexographic printing produced from Marcandy Co., which arranged a cylindrical printing base made of a steel having a circumference of 10 inches and a width of 250mm, was prepared. A glass fiber sleeve having a slightly bigger inner diameter than an outer diameter of the cylindrical printing base was used as a cylinder-like supporting layer. The surface of the sleeve was polished by a grinder in order to enhance size accuracy and surface homogeneity, thereby, facilitating application of an adhesive polymer.
A compound for forming an adhesive polymer containing urethane prepolymer of Example 2 was coated to the polished surface of the glass fiber sleeve. The sleeve was covered with a tube shaped polyethylene terephthalate and irradiated with an ultraviolet ray. The urethane prepolymer on the sleeve polymerized and cured to form an adhesive polymer layers. Thereby, a cylinder-like adhesive material was formed as seamless. The seamless cylinder-like adhesive material was covered on the cylindrical printing base of the label printing machine and fixed thereto.
Subsequently, a relief film having patterns of letters, line drawings, set-solid portions and netting dots was produced by using a flexographic printing relief of silel-PLS-type thickness of 1.70mm provided from E. I. du Pont de

Nemours & Co. The size thereof was made to correspond with the cylindrical printing base having a circumference of 10 inches and a width of 250mm. The relief film was held lightly and then pressed down to adhere onto the cylinder-like adhesive material fixed to the cylindrical printing base.

When a print-proof test was performed by using water ink (Toyo Ink Co. made), at a printing rate of 100m/minute, even after printing 100000m the relief film showed no signs of shifting or peeling off from the printing base. Moreover, compared to the conventional printed matter, which was printed by fixing the cylindrical printing base and the relief film only with a double-sided tape, the present printed matter had excellent quality with a fine set-solid portion and a sharper netting dot.

After printing, the cylinder-like adhesive material relief was drawn out from the cylindrical printing base. The adhesive material was kept in a dark and cool place together with the stripped relief film for one month. After that, the cylinder-like adhesive material for the printing relief was again equipped onto the cylindrical printing base of the printing machine. The relief film was re-adhered to it and a 100000m print-proof test was carried out for 10 times. Identically, the quality of the printed matter was good, and the relief film showed no signs of shifting or peeling off.

The adhesive material itself may be attached or detached even after the relief film is stripped off. It may be stripped completely from the inter-surface of the relief film while maintained adhered to the printing base in the course of re-sticking. Therefore, the relief film may be re-stuck over and over, without shifting or peeling off after it is adhered. To use an adhesive material comprising such adhesive polymer will facilitate re-sticking of the relief film for any number of times.

As is mentioned above in detail, the adhesive material of the present invention is used for adhering the relief film to the printing base. When re-sticking the relief film, it is carried out easy and complete interface-stripping. Furthermore, it is unnecessary to wipe away or recoat the adhesive material, since the adhesive material maintains fixed to the printing base. The relief film may be re-stuck for a number of times and still show no shifts or signs of peeling off from the printing base when carrying out printing.

## Claims

1. A urethane prepolymer, which is impregnated into or coated onto a supporting layer to make an adhesive polymer for an adhesive material of a printing relief, is determined by the following chemical formula [I]:

$$\text{A-O-CONH-B-NHCO-}$$

$$\text{-[\{O-}C_pH_q\text{-(O-CO-}C_rH_s\text{-CO-O-}C_pH_q)_t\text{-O-CONH-B-NHCO\}}_u\text{-(O-D-O-CONH-B-NHCO)}_v\text{-}$$

$$\text{-\{O-}C_pH_q\text{-(O-CO-}C_rH_s\text{-CO-O-}C_pH_q)_t\text{-O-CONH-B-NHCO\}}_u]_w\text{-O-E} \quad \text{........[I]}$$

wherein A-O- is either one of a dehydrogenated remaining group selected from hydroxyalkyl(meth)acrylate, hydroxyalkyl vynil ether and epoxide including hydroxy group; -B- is a depolyisocyanagated remaining group of organic polyisocyanate; -O-$C_pH_q$-(O-CO-$C_rH_s$-CO-O-$C_pH_q$)$_t$-O- is a dehydrogenated remaining group of a polyester polyol having a number average molecular weight of 500-5000, of which p is a number of 1-36, q is a number of 2-72, r is a number of 10-34, s is a number of 20-68 and t is a number for making the number average molecular weight; -O-D-O- is either one of a dehydrogenated remaining group selected from alkylene glycol, dimer diol, diol including ester group, diol including carboxy group or the foregoing -O-$C_pH_q$-(O-CO-$C_rH_s$-CO-O-$C_pH_q$)$_t$-O-; -O-E is either one of a dehydrogenated remaining group selected from alkyl alcohol, hydroxy carboxylic acid or hydroxy carboxylic acid ester, or is identical to the foregoing A-O-; and u is a number of 1-50, v is a number of 0-50, and w is a number of 1-10.

2. The urethane prepolymer as determined in claim 1 **characterized that** a number average molecular weight thereof is 3000-100000.

3. A spray comprising a can containing said urethane prepolymer with high pressure liquid gas for spraying.

4. An adhesive material, to fix a relief resin film onto a printing base of a printing machine, comprising a supporting layer and adhesive polymer polymerized and cured from said urethane prepolymer impregnated into or coated onto the supporting layer.

**5.** The adhesive material according to claim 4 wherein said impregnated or coated urethane prepolymer is performed with a spray or a hot-melt coat.

**6.** The adhesive material according to claim 4 wherein said adhesive polymer is applied onto one side or both sides of said supporting layer through said impregnated or coated.

**7.** The adhesive material according to claim 4 wherein said adhesive polymer is applied onto both sides of said supporting layer and a shore A hardness of each adhesive polymer is a degree of 20 to 80 and a thickness thereof is 0.005 to 15mm.

**8.** The adhesive material according to claim 4 wherein said supporting layer is one selected from a paper, a woven fabric, a non-woven fabric, a polyolefin resin film, a polyester film, a porous resin film and a cellulose base film strengthened with a resin.

**9.** The adhesive material according to claim 4 wherein said supporting layer is elastic.

**10.** The adhesive material according to claim 4 wherein said supporting layer is a foam film having a compressible elasticity.

**11.** The adhesive material according to claim 4 wherein said supporting layer is sheet-like and has a tensile strength of at least 1000 $N/cm^2$ and a thickness of 0.03 to 25 mm.

**12.** A printing relief, to be fixed onto a printing base made of a metal in a printing machine, comprising a relief film made of a resin and an adhesive material of which an adhesive strength to the metal is stronger than to the resin.

**13.** The printing relief as set forth in claim 12 **characterized that** the adhesive material is same to claim 4.

**14.** The printing relief as set forth in claim 12 **characterized that** a shape thereof is cylindrical.

FIG. 1

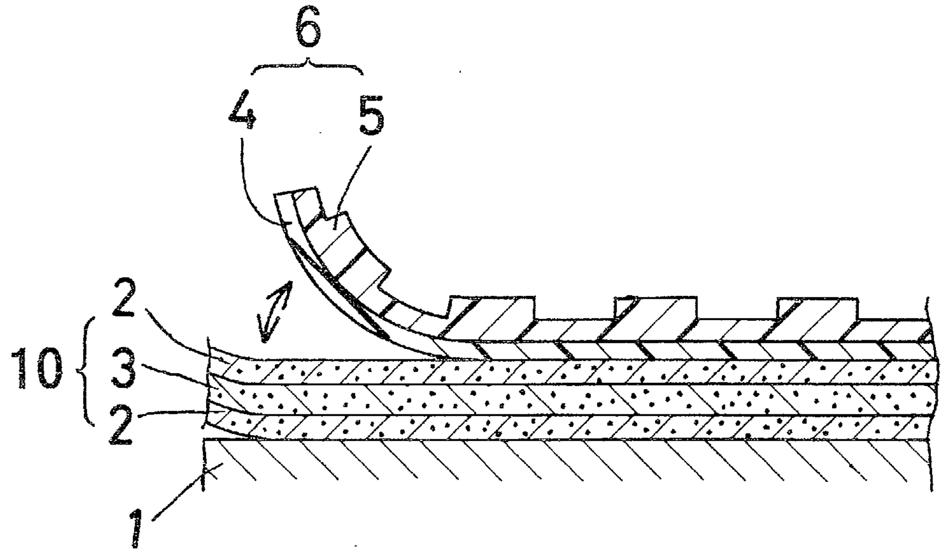


FIG. 2

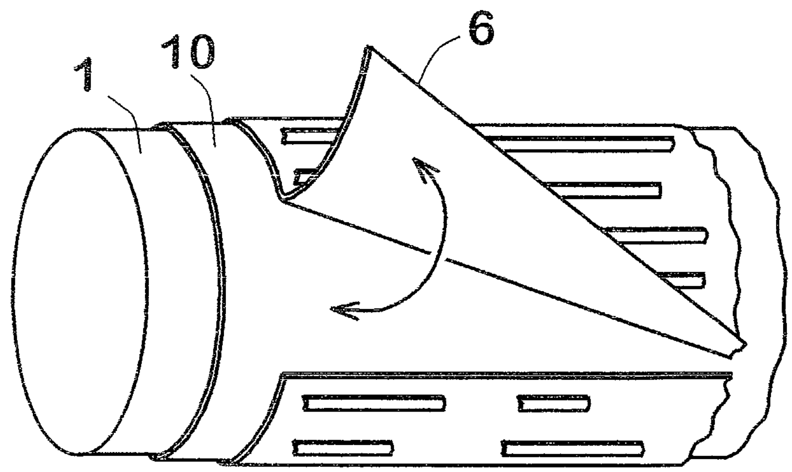

European Patent Office

# EUROPEAN SEARCH REPORT

Application Number
EP 02 25 1826

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br>A | DE 44 41 463 A (HENKEL KGAA)<br>1 June 1995 (1995-06-01)<br>* claims 1,13; examples 7,11; table 3 *<br>* page 2, line 45 - page 3, line 46 *<br>--- | 1,2<br><br>4,6,7 | C08G18/42<br>C08G18/67<br>C08G18/10<br>C09J175/16 |
| A | DATABASE WPI<br>Section Ch,<br>Derwent Publications Ltd., London, GB;<br>Class A25, AN 1973-58982U<br>XP002210536<br>& JP 48 047538 A (DAINIPPON INK & CHEM KK)<br>* abstract *<br>--- | 1,4,8,9,<br>11-13 | |
| A | DATABASE WPI<br>Section Ch, Week 199621<br>Derwent Publications Ltd., London, GB;<br>Class A97, AN 1996-204602<br>XP002210537<br>& JP 08 072429 A (TSUNODA SEIPANSHO KK),<br>19 March 1996 (1996-03-19)<br>* abstract *<br>--- | 4,6,9,<br>11,12,14 | **TECHNICAL FIELDS SEARCHED (Int.Cl.7)** |
| A | DATABASE WPI<br>Section Ch, Week 199415<br>Derwent Publications Ltd., London, GB;<br>Class A32, AN 1994-123480<br>XP002210538<br>& JP 06 071217 A (DAINIPPON INK & CHEM KK)<br>, 15 March 1994 (1994-03-15)<br>* abstract *<br>----- | 3 | C08G<br>C09J<br>B41N |

The present search report has been drawn up for all claims

| Place of search | Date of completion of the search | Examiner |
|---|---|---|
| MUNICH | 21 August 2002 | Neugebauer, U |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 02 25 1826

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2002

| Patent document cited in search report | | Publication date | Patent family member(s) | | Publication date |
|---|---|---|---|---|---|
| DE 4441463 | A | 01-06-1995 | DE | 4441463 A1 | 01-06-1995 |
| | | | AT | 196155 T | 15-09-2000 |
| | | | DE | 59409515 D1 | 12-10-2000 |
| | | | DK | 730615 T3 | 08-01-2001 |
| | | | WO | 9514725 A1 | 01-06-1995 |
| | | | EP | 0730615 A1 | 11-09-1996 |
| | | | ES | 2151044 T3 | 16-12-2000 |
| | | | PT | 730615 T | 28-02-2001 |
| | | | US | 5700891 A | 23-12-1997 |
| JP 48047538 | A | 06-07-1973 | JP | 51041674 B | 11-11-1976 |
| JP 8072429 | A | 19-03-1996 | JP | 2700529 B2 | 21-01-1998 |
| JP 6071217 | A | 15-03-1994 | NONE | | |

EPO FORM P0459

For more details about this annex : see Official Journal of the European Patent Office, No. 12/82